# EUROPÄISCHE PATENTSCHRIFT

(11) **EP 3 313 579 B1**
(45) Veröffentlichungstag und Bekanntmachung des Hinweises auf die Patenterteilung: **23.10.2019**
(21) Anmeldenummer: 16741853.2
(22) Anmeldetag: 23.06.2016
(51) Int. Cl.: B02C 18/00, B02C 25/00, B62D 33/06, B60J 1/00, B60J 1/18, B02C 21/02

(54) **ZERKLEINERUNGSVORRICHTUNG, DIE AUF DER LADEFLÄCHE EINER TRANSPORTVORRICHTUNG ANORDENBAR IST**
COMMINUTING DEVICE WHICH CAN BE ARRANGED ON THE LOADING SURFACE OF A TRANSPORT DEVICE
DISPOSITIF DE BROYAGE POUVANT ÊTRE AGENCÉ SUR LA SURFACE DE CHARGEMENT D'UN DISPOSITIF DE TRANSPORT

(30) Priorität: 23.06.2015 DE 202015004425 U; 13.11.2015 DE 202015007885 U
(43) Veröffentlichungstag der Anmeldung: 02.05.2018
(73) Patentinhaber: Doppstadt Familienholding GmbH, 42555 Velbert (DE)
(72) Erfinder: DOPPSTADT, Johann, 42555 Velbert (DE)
(74) Vertreter: Von Rohr Patentanwälte Partnerschaft mbB
(86) Internationale Anmeldenummer: PCT/EP2016/001068
(87) Internationale Veröffentlichungsnummer: WO 2016/206808

(56) Entgegenhaltungen:
- WO-A1-2004/082909
- DE-T2- 69 006 335
- DE-U1-202015 102 001
- FR-A1- 2 696 199
- US-A1- 2014 190 046

## Beschreibung

Die Erfindung betrifft eine Zerkleinerungsvorrichtung, die auf der Ladefläche einer Transportvorrichtung anordenbar ist.

Im Stand der Technik ist es bekannt, Zerkleinerungsvorrichtungen, wie zum Beispiel sogenannte Hacker auf Transportvorrichtungen, zum Beispiel LKWs an ihren Bestimmungsort zu transportieren und dort einzusetzen. Es ist auch bekannt, derartige Vorrichtungen so einzusetzen, dass sie die Antriebsvorrichtung der Transportvorrichtung für den eigenen Antrieb mitbenutzen können. In herkömmlichen Transportfahrzeugen ist in der Fahrzeugkabine an der der Ladefläche zugewandten Seite meist nur ein kleines Sichtfenster vorhanden, sodass es von der Fahrzeugkabine aus sehr schwierig ist, die Tätigkeit der Zerkleinerungsvorrichtung zu überwachen, wenn sie auf der Ladefläche sich befindet. Dieses insbesondere der Fall, wenn die Zerkleinerungsvorrichtung von der Fahrzeugkabine aus gesteuert werden soll. Auch sicherheitstechnische Bedenken sprechen gegen den Einsatz einer wie zuvor beschriebenen Lösung, weil eben die Bedienung, Überwachung und Steuerung von der Fahrzeugkabine aus nicht in ausreichendem Maße gewährleistet ist. Dokument DE202015102001 U1 offenbart einen mobilen Trommelhacker, der auf einem LKW-Fahrgestell angeordnet ist.

Aufgabe der Erfindung ist es daher, eine Lösung zur Verfügung zu stellen, die zumindest einen der zuvor beschriebenen Nachteile nicht mehr aufweist.

Zur Lösung der gestellten Aufgabe schlägt die Erfindung eine Zerkleinerungsvorrichtung vor, wobei die Zerkleinerungsvorrichtung mittels einer Schnittstelle mit dem Antrieb der Transportvorrichtung verbindbar und dadurch antreibbar ist, die Steuerung für die Zerkleinerungsvorrichtung in einer Fahrzeugkabine der Transportvorrichtung vorgesehen ist, das oder die Bedienelement(e) der Steuerung für die Zerkleinerungsvorrichtung auf der der Fahrtrichtung des Transportmittels entgegengesetzten Seite, das heißt zur Ladefläche zugewandt angeordnet ist/sind, die Fahrzeugkabine ein Sichtfenster aufweist, welches ebenfalls zur Ladefläche zugewandt ist und das Sichtfenster zumindest an einer Seite der Fahrzeugkabine pfosten- bzw. abdeckungsfrei und abgewinkelt bzw. abgerundet ausgebildet ist, so dass es sich bis auf eine der Seitenflächen der Fahrzeugkabine erstreckt. Durch diese Art der Ausbildung des Sichtfensters gelingt es jetzt, der Bedienperson für die Zerkleinerungsvorrichtung in der Fahrzeugkabine eine ungehinderte Sicht auf die Zerkleinerungsvorrichtung zu gewährleisten. Das Sichtfenster erstreckt sich jetzt nahezu über die gesamte Breite der Rückseite, d.h. der der Ladefläche zugewandten Seite der Transportvorrichtung. Es ist vorzugsweise auf der Beifahrerseite der Fahrzeugkabine nahezu bis zur Eingangstür für den Beifahrer sichtbehinderungsfrei. Da die Erfindung gleichzeitig vorschlägt, das oder die Bedienelement(e) an der der Ladefläche zugewandten Seite der Fahrzeugkabine anzuordnen, kann die Bedientperson problemlos alle Vorgänge ohne Sichtbehinderung von der Fahrzeugkabine aus steuern bzw. regeln. Es ist demzufolge ohne Sichtbehinderung möglich, dass Beschicken, aber auch die Zerkleinerungsvorgänge selbst und den Abtransport des zerkleinerten Gutes zu beobachten und im Störungsfalle sofort einzugreifen. Von Vorteil ist es natürlich, wenn zumindest der Sitz in der Fahrzeugkabine, der sich in der Nähe der Bedienelemente für die Steuerung der Zerkleinerungsvorrichtung befindet, drehbar ausgebildet ist. Dies wird später noch in einer Weiterbildung der Erfindung entsprechend ausgeführt. Regelmäßig wird dies in bevorzugter Weise an der Beifahrerseite der Fall sein.

Eine vorteilhafte Weiterbildung der zuvor beschriebenen Zerkleinerungsvorrichtung schlägt vor, dass das Sichtfenster an beiden Seiten der Fahrzeugkabine pfostenfrei, abgewinkelt bzw. abgerundet, das heißt sichtbehinderungsfrei, ausgebildet ist. Entsprechend dieser Lösung ist es dann möglich, die Bedienungselemente für die Steuerung der Zerkleinerungsvorrichtung auch auf der Seite des Fahrersitzes anzuordnen und die Rundumsicht noch weiter zu verbessern.

Die Erfindung schlägt insbesondere vor, dass als Zerkleinerungsvorrichtung ein Hacker vorgesehen ist. Die Erfindung ist zwar auf einen Hacker nicht eingeschränkt, dieser ist allerdings bevorzugt für die erfindungsgemäße Lösung vorgesehen.

Wie bereits erwähnt ist es gemäß eines weiteren Aspekts der Erfindung vorgesehen, dass zumindest der Sitz in der Fahrzeugkabine, der dem oder den Bedienelement(en) der Steuerung zugewandt ist, drehbar, zumindest um 180°, vorzugsweise um 360° drehbar ist. Die damit erzielbaren Vorteile liegen auf der Hand. So kann die Bedienperson den Sitz in die entsprechende Position auf die Zerkleinerungsvorrichtung zugewandt einstellen, wenn er am Einsatzort angekommen ist und die Zerkleinerungsvorrichtung in Betrieb genommen werden soll.

Gemäß einer vorteilhaften Weiterbildung zeichnet sich Zerkleinerungsvorrichtung, wie vorher beschrieben, dadurch aus, dass der drehbare Sitz der Beifahrersitz ist. Dadurch wird es ermöglicht, dass entweder ein Beifahrer unabhängig von dem Fahrer der Transportvorrichtung oder aber auch der Fahrer selbst die Zerkleinerungsvorrichtung vom Beifahrersitz aus bedienen kann, wenn er dazu die notwendige Berechtigung besitzt. Damit wird die Sicherheit des Fahrers, beim normalen Transportvorgang in keinster Weise beeinflusst. Zusätzliche Sicherungs- bzw. Blockierereinrichtungen zum Festlegen des Fahrersitzes in der vorschriftsmäßigen Stellung sind dadurch nicht notwendig.

Eine Variante der erfindungsgemäßen Zerkleinerungsvorrichtung zeichnet sich dadurch aus, dass wenigstens eine Bedieneinheit für die Steuerung der Zerkleinerungsvorrichtung in der Fahrzeugkabine vorgesehen ist. Vorteilhafter Weise sollte diese Bedieneinheit so angeordnet sein, dass sie vom Beifahrersitz aus bzw. von dem Sitz aus, von dem die Verkleinerungsvorrichtung bedient wird, gut erreichbar ist.

Bevorzugt ist es dabei, wenn die Bedieneinheit am drehbaren Sitz in der Fahrzeugkabine angeordnet ist. Dadurch wird die Bedienung der Verkleinerungsvorrichtung in besonders bequemerweise möglich. Auch unfallschutztechnische Aspekte können durch diese Variante besser berücksichtigt werden. Der Bediener der Zerkleinerungsvorrichtung kann dabei ohne visuellen Blickkontakt die Bedieneinheit betätigen.

Von besonderem Vorteil ist es dabei weiterhin, wenn die Bedieneinheit in Art eines Joysticks ausgebildet ist. Die zuvor beschriebenen Netzeffekte treten bei dieser Variante der Erfindung in gleicher Weise auf.

Natürlich schlägt die Erfindung auch vor, dass das Sichtfenster mit einer Scheibe aus einem bruchsicheren Material, wie z.B. bruchsicheren Sicherheitsglas, Plexiglas oder ähnlichem Material geschlossen bzw. ausgefüllt ist. Die Erfindung ist auf eine solche Lösung selbstverständlich nicht eingeschränkt, weil die Bedingungen für einen Einsatz der Zerkleinerungsvorrichtung auch schon ausreichend gegeben sind, wenn ein offenes Fenster vorhanden ist. Bevorzug ist es allerdings, eine entsprechende Scheibe dort vorzusehen, da dies natürlich von den Arbeitsbedingungen her wesentlich günstiger ist und zum anderen sicherheitstechnisch auf Vorteile bringt, da gegebenenfalls wegspringende Elemente des zu zerkleinern Gutes dann von der Scheibe abfallen ohne in die Fahrzeugkabine eindringen zu können. Die Verletzungsgefahr für die Bedienperson wird damit natürlich verringert.

Gemäß einer Variante der erfindungsgemäßen Zerkleinerungsvorrichtung ist es vorgesehen, dass das Sichtfenster in einem Radis abgerundet ist, so dass die beiden abgewinkelten Teile des Sichtfensters vorzugsweise in etwa einen rechten Winkel bilden. Das Sichtfenster wird dabei natürlich der äußeren Form der Fahrzeugkabine angepasst werden, weshalb auch ein vom rechten Winkel abweichender Winkel vorgesehen sein kann. Die abgerundete Form ist dabei von Vorteil, weil durch eine Abwinklung Sichtbehinderungen bzw. optische Täuschungen durch die Brechkante verhindert werden. An einer Kante bricht sich bekanntermaßen das Licht und wird gegebenenfalls auch abgelenkt, weshalb die abgerundete Variante bevorzugt ist.

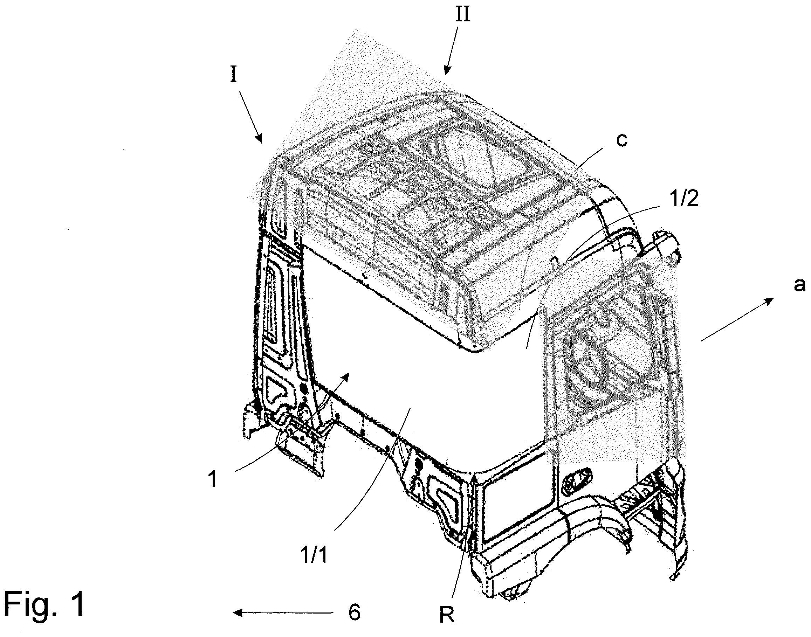

Die Erfindung wird nachfolgend anhand einer einzigen Figur beschrieben. Die Figur 1 zeigt dabei nur einen Teil der Transportvorrichtung I, beispielsweise eines LKWs, nämlich hier die Fahrzeugkabine II. Die Transportvorrichtung selbst ist lediglich schematisch mit einem Pfeil und dem Bezugszeichen I gekennzeichnet. Vor der Fahrzeugkabine II befindet sich ein Pfeil der die Fahrtrichtung a bezeichnet. An der Rückseite der Fahrzeugkabine II, in Richtung auf die nicht gezeigte Ladefläche weisend, befindet sich ein weiterer Pfeil, der mit b bezeichnet ist. Dieser bezeichnet die der Fahrtrichtung abgewandt Seite. Mit dem Bezugszeichen c ist die Seitenfläche der Fahrzeugkabine II bezeichnet, an der bevorzugter Weise das Sichtfenster 1 pfostenfrei bzw. sichtbehinderungsfrei ausgebildet ist. Das Sichtfenster 1 ist in zwei gegeneinander abgewinkelte Seiten aufgeteilt, wobei sich der Teil 1/1 des Sichtfensters 1 genau in Richtung b erstreckt, während sich der Teil 1/2 des Sichtfensters 1 in der Seitenfläche c der Fahrzeugkabine II befindet.

Die Erfindung wurde zuvor anhand von Ausführungsbeispielen beschrieben. Die Erfindung ist darauf jedoch nicht beschränkt. Die jetzt und mit der Anmeldung und später eingereichte Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Zerkleinerungsvorrichtung, die auf der Ladefläche einer Transportvorrichtung (I) anordenbar ist, die Zerkleinerungsvorrichtung mittels einer Schnittstelle mit dem Antrieb der Transportvorrichtung (I) verbindbar und dadurch antreibbar ist, die Steuerung für die Zerkleinerungsvorrichtung in einer Fahrzeugkabine (II) der Transportvorrichtung vorgesehen ist, **dadurch gekennzeichnet, dass** das oder die Bedienelement(e) der Steuerung für die Zerkleinerungsvorrichtung auf der der Fahrtrichtung (a) des Transportmittels (I) entgegengesetzten Seite, das heißt zur Ladefläche zugewandt angeordnet ist/sind, die Fahrzeugkabine (II) ein Sichtfenster (1) aufweist, welches ebenfalls zur Ladefläche zugewandt ist und das Sichtfenster (1) zumindest an einer Seite der Fahrzeugkabine pfostenfrei und abgewinkelt bzw. abgerundet ausgebildet ist, so dass es sich bis auf eine der Seitenflächen (c) der Fahrzeugkabine (II) erstreckt.

2. Zerkleinerungsvorrichtung nach Anspruch 1, **dadurch gekennzeichnet, dass** das Sichtfenster (1) an beiden Seiten der Fahrzeugkabine (II) abgewinkelt bzw. abgerundet und pfostenfrei ausgebildet ist.

3. Zerkleinerungsvorrichtung nach einem der Ansprüche 1 und 2, **dadurch gekennzeichnet, dass** als Zerkleinerungsvorrichtung ein Hacker vorgesehen ist.

4. Zerkleinerungsvorrichtung nach einem der vorhergehenden Ansprüche, **dadurch gekennzeichnet, dass** zumindest der Sitz in der Fahrzeugkabine (II), der dem oder den Bedienelement(en) der Steuerung der Zerkleinerungsvorrichtung zugewandt ist, drehbar, zumindest um 180°, vorzugsweise um 360° drehbar ist.

5. Zerkleinerungsvorrichtung nach Anspruch 4,
**dadurch gekennzeichnet, dass** der drehbare Sitz der Beifahrersitz ist.

6. Zerkleinerungsvorrichtung nach einem der vorhergehenden Ansprüche, **dadurch gekennzeichnet, dass** wenigstens eine Bedieneinheit für die Steuerung der Zerkleinerungsvorrichtung in der Fahrzeugkabine vorgesehen ist.

7. Zerkleinerungsvorrichtung nach Anspruch 4,
**dadurch gekennzeichnet, dass** die Bedieneinheit am drehbaren Sitz in der Fahrzeugkabine (II) angeordnet ist.

8. Zerkleinerungsvorrichtung nach einem der vorhergehenden Ansprüche, **dadurch gekennzeichnet, dass** die Bedieneinheit in Art eines Joysticks ausgebildet ist.

9. Zerkleinerungsvorrichtung nach einem der vorhergehenden Ansprüche, **dadurch gekennzeichnet, dass** das Sichtfenster (1) mit einer Scheibe aus einem bruchsicheren Material, wie z.B. bruchsicheren Sicherheitsglas, Plexiglas oder ähnlichem Material geschlossen bzw. ausgefüllt ist.

10. Zerkleinerungsvorrichtung nach einem der vorhergehenden Ansprüche, **dadurch gekennzeichnet, dass** das Sichtfenster (1) in einem Radis (R) abgerundet ist, so dass die beiden abgewinkelten Teile (1/1 und 1/2) des Sichtfensters vorzugsweise einen rechten Winkel bilden.

## Claims

1. Crushing device which can be arranged on the loading platform of a transport device (I), the crushing device can be connected by means of an interface to the drive of the transport device (I) and can thereby be driven, the control for the crushing device being provided in a vehicle cabin (II) of the transport device,
**characterised in that**
the operating element(s) of the control for the crushing device is/are arranged on the side opposite the direction of travel (a) of the transport means (I), i.e. facing the loading platform, the vehicle cabin (II) has a viewing window (1) which likewise faces the loading platform, and the viewing window (1) is formed at least on one side of the vehicle cabin without posts and angled and/or rounded so that it extends as far as one of the side surfaces (c) of the vehicle cabin (II).

2. Crushing device according to claim 1, **characterised in that** the viewing window (1) on both sides of the vehicle cabin (II) is angled and/or rounded and formed without posts.

3. Crushing device according to any one of claims 1 and 2, **characterised in that** a chipper is provided as the crushing device.

4. Crushing device according to any one of the preceding claims, **characterized in that** at least the seat in the vehicle cabin (II) which faces the operating element(s) of the control of the crushing device, is rotatable, by at least 180°, preferably rotatable by 360°.

5. Crushing device according to claim 4, **characterized in that** the rotatable seat is the passenger seat.

6. Crushing device according to any one of the preceding claims, **characterized in that** at least one operating unit for controlling the crushing device is provided in the vehicle cabin.

7. Crushing device according to claim 4, **characterized in that** the operating unit is arranged on the rotatable seat in the vehicle cabin (II).

8. Crushing device according to any one of the preceding claims, **characterized in that** the operating unit is formed in the manner of a joystick.

9. Crushing device according to any one of the preceding claims, **characterized in that** the viewing window (1) is closed and/or filled with a pane made of a shatterproof material, such as, for example, shatterproof safety glass, plexiglass or similar material.

10. Crushing device according to any one of the preceding claims, **characterized in that** the viewing window (1) is rounded in a radius (R) so that the two angled parts (1/1 and 1/2) of the viewing window preferably form a right angle.

## Revendications

1. Dispositif de broyage qui peut être disposé sur la surface de chargement d'un dispositif de transport (I), le dispositif de broyage peut être relié par une interface à l'entraînement du dispositif de transport (I) et peut ainsi être entraîné, la commande du dispositif de broyage étant prévue dans une cabine (II) du véhicule du dispositif de transport,
**caractérisé en ce que**
le ou les élément(s) de commande de la commande du dispositif de broyage sont disposés du côté opposé au sens de marche (a) du moyen de transport (I), c'est-à-dire face à la zone de chargement, la cabine (II) du véhicule présente une fenêtre de visualisation (1) qui fait également face à la zone de chargement, et la fenêtre de visualisation (1) est conçue sans poteaux et inclinée et/ou arrondis au moins sur un côté de la cabine du véhicule, de sorte qu'elle s'étend jusqu'à une des surfaces latérales (c) de la cabine (II) du véhicule.

2. Dispositif de broyage selon la revendication 1, **caractérisé en ce que** la fenêtre de visualisation (1) des deux côtés de la cabine (II) du véhicule est inclinée et/ou arrondie et réalisée sans poteaux.

3. Dispositif de broyage selon l'une quelconque des revendications 1 et 2, **caractérisé en ce qu'**un broyeur est prévu comme dispositif de broyage.

4. Dispositif de broyage selon l'une quelconque des revendications précédentes, **caractérisé en ce qu'**au moins le siège dans la cabine (II) du véhicule qui fait face au(x) élément(s) de commande de la commande du dispositif de broyage est rotatif, au moins à 180°, de préférence à 360°.

5. Dispositif de broyage selon la revendication 4, **caractérisé en ce que** le siège rotatif est le siège passager.

6. Dispositif de broyage selon l'une quelconque des revendications précédentes, **caractérisé en ce qu'**au moins une unité de commande pour commander le dispositif de broyage est prévue dans la cabine du véhicule.

7. Dispositif de broyage selon la revendication 4, **caractérisé en ce que** l'unité de commande est disposée sur le siège rotatif dans la cabine (II) du véhicule.

8. Dispositif de broyage selon l'une quelconque des revendications précédentes, **caractérisé en ce que** l'unité de commande est construite à la manière d'un joystick.

9. Dispositif de broyage selon l'une quelconque des revendications précédentes, **caractérisé en ce que** la fenêtre de visualisation (1) est fermée et/ou remplie d'une vitre en un matériau incassable, comme par exemple du verre de sécurité incassable, du plexiglas ou un matériau similaire.

10. Dispositif de broyage selon l'une quelconque des revendications précédentes, **caractérisé en ce que** la fenêtre de visualisation (1) est arrondie dans un rayon (R) de sorte que les deux parties inclinées (1/1 et 1/2) de la fenêtre de visualisation forment de préférence un angle droit.
